# EUROPEAN PATENT APPLICATION

(11) **EP 1 134 734 A2**
(43) Date of publication of application: **19.09.2001**
(21) Application number: 01104928.5
(22) Date of filing: 28.02.2001
(51) Int. Cl.: G11B 7/013

(54) **Optical disc on which pre-pits are recorded**

(30) Priority: 17.03.2000 JP 2000077031
(71) Applicant: KABUSHIKI KAISHA TOSHIBA, Kawasaki-shi (JP)
(72) Inventor: Matsumara, Masaaki, 1-1 Shibaura 1-chome Minato-ku Tokyo 105 (JP)
(74) Representative: Henkel, Feiler, Hänzel

(57) **Abstract**

An optical disc of the present invention has a plurality of kinds of pre-pits (P1) with a correction size which have a length only uniformly shorter than a plurality of pre-pits (P2) with a specified correctional size which have a constant width, a constant depth and a constant depth inclination and a different length in correspondence to the data thereby recording the data with the pre-pits with the correction size.

## Description

The present invention relates to an optical disc on which information is recorded in a high density in such a form as pit rows and mark rows. Furthermore, the present invention relates to an optical disc playback apparatus for playing back such optical disc and a method for playing back an optical disc.

A general technique of manufacturing a master disc of an optical disc and a technique of copying the disc are described in pages 151 through 196 of Introduction to Video Discs and DAD edited by Soichi Iwamura and published by Corona Publishing Co. Ltd. In short, the master disc of the optical disc is such that a photoresist is applied on a glass disc. When a laser beam is applied to the master disc from an exposure apparatus, the photoresist of the master disc is exposed to light. Next, the portion exposed to light is removed from the master disc in the development processing, so that pits or grooves are formed. From the master disc, a stamper is manufactured. With the stamper, the disc is formed. On this disc thus formed, a reflection film is formed when the disc is dedicatedly used for playback, and a recording film is formed when the disc is used for recording and playback with the result that an optical disc in the state of shipment is completed. In the case of a DVD (Digital Versatile Disk), two discs are applied to each other to provide one disc.

The manufacture of pre-pits will be explained. A size of the pre-pits formed on a CD (Compact Disc) or the like is large as compared with the exposure light beam diameter, a sufficient margin is reserved for the forming the pits. For example, in the case of a CD, the minimum pit length is 0.9 *µ*m. The exposure apparatus used at this time is such that the wavelength of the recording laser is 0.458 *µ*m and NA (Numerical Aperture) is 0.93. When the exposure light beam diameter is substituted in an equation (ω1 = 2 × 0.41 × λ/NA ), ω1 = 0.40 *µ*m is given. Each kind of pit including the minimum pit of 0.9 *µ*m is formed by using this exposure beam.

However, in the case of the DVD, the minimum pit length is 0.40 *µ*m, so that virtually no margin is left for the formation of pits. In this case, each kind of pit is formed from the minimum pit of 0.40 *µ*m by conducting recording compensation such that only the minimum pit is recorded by increasing the power. In this manner, the pre-pit is formed in such a manner that the length of the pre-pits becomes the same as this theoretical value in this manner.

In the prior art, the pre-pits are recorded in such a manner that the length of the pre-pit becomes the same as the theoretical value. For example, in the case of the DVD, the laser wavelength λ of the DVD is 0.658 *µ*m and the NA of the object lens is 0.60. The spot radius ω can be represented in an equation of ω = 0.41λ/NA. When the equation is actually calculated, the result of ω = 0.45 *µ*m is given. Furthermore, the cutoff frequency of the optical system can be represented in an equation of f = 1/2PL = 1/λ when the space frequency of the pit on the disc is denoted by f, and the minimum pit is denoted by PL. When the minimum pit length on the DVD is determined, an equation of PL = λ/2 = 0.33 *µ*m is given. From this result, it follows that since the minimum pit length of the DVD is large as compared with the minimum pit length in the cutoff frequency of the playback optical system, the minimum pit does not particularly become a problem as jitters.

However, the density of pits are further heightened in the same method, the minimum pit length becomes smaller than the minimum pit length in the cutoff frequency of the playback optical system with the result that the resolution is deteriorated and the jitter value is further deteriorated. When the jitter value is deteriorated, it becomes difficult to design the system. When discs having an inferior jitter value are permitted, the margin to the system becomes so strict that the system itself becomes unstable. Consequently, the formation of the pre-pits is required for lowering the jitter value as much as possible.

Jpn. Pat. Appln. KOKAI Publication No. 7-85504 (literature 1) discloses a technique of optimizing a pit length of pre-pit. However, literature 1 does not disclose a technique for making a pit width uniform. According to the technique disclosed in literature 1, pre-pits having a uniform pit width cannot be obtained. Consequently, jitters in the playback signal cannot be sufficiently suppressed.

Jpn. Pat. Appln. KOKAI Publication No. 9-231569 (literature 2) discloses a technique of optimizing a pit width of pre-pit. However, literature 2 does not disclose a technique of correcting the pit length. According to the technique disclosed in literature 2, pits having an optimal pit length cannot be obtained. Consequently, the problem of the cross talk in the playback signal cannot be sufficiently improved.

The present invention has been made in view of the above problem, and an object of the present invention is to provide an optical disc, an optical disc playback apparatus and a method for playing back the optical disc which are described as follows.
(1) An optical disc capable of recording data with a plurality of kinds of pre-pits with a correction size which have a constant width and have a length only uniformly shorter than a plurality of kinds of pre-pits with a specified size which have different lengths thereby stably playing back information in order to suppress the jitter value and improve the cross talk.
(2) An optical disc playback apparatus and a method for playing back an optical disc capable of recording data with a plurality of pre-pits with a correction size which have a constant width, and a length only uniformly shorter than a plurality of kinds of pre-pits with a specified size which have different lengths thereby stably playing back information in order to suppress the jitter value and improve the cross talk

In order to solve the above problem and attain the object, the optical disc, the optical disc playback apparatus, and the method for playing back the optical disc of the present invention are constituted in the following manner.
(1) The optical disc according to the present invention has a plurality of kinds of pre-pits with a correction size which have a length only uniformly shorter than a plurality of kinds of pre-pits with a specified size which have a constant width, a constant width and a constant depth inclination and a different length in correspondence to data, so that data is recorded with the plurality of kinds of pre-pits with the correction size.
(2) The optical disc playback apparatus according to the present invention plays back an optical disc in which data is recorded with a plurality of kinds of pre-pits with a correction size which have a length only uniformly shorter than a plurality of kinds of pre-pits with a specified size which have a constant width, a constant depth and a constant depth inclination and a different length in correspondence to the data.
(3) The method for playing back an optical disc plays back an optical disc in which data is recorded with a plurality of kinds of pre-pits with a correction size which have a length only uniformly shorter than a plurality of kinds of pre-pits with a specified size which have a constant width, a constant depth and a constant depth inclination and a different length in correspondence to the data.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a view in which pre-pit rows in an optical disc of the present invention are denoted with a solid line, and pre-pit rows in the conventional optical disc are denoted with a broken line for explaining a difference between the pre-pit rows in the optical disc of the present invention and the pre-pit rows in the conventional optical disc.
FIG. 2 is a view showing a cross section of pits (pre-pits with a correction size) provided on the optical disc of the present invention.
FIG. 3 is a view showing a relationship between the pre-pits formed on the optical disc of the present invention and the recording signal waveform thereof.
FIG. 4 is a view showing a schematic structure of a playback apparatus for playing back the optical disc of the present invention (the optical disc on which data is recorded with the pre-pits with the correction size).
FIG. 5 is a view showing an effect (a decrease in jitters) in the case where the pre-pits having the correction size are applied to the DVD specification having a memory capacity of 4.7 Gbytes.
FIG. 6 is a view showing an eye pattern in the case where the pre-pits having a specified size are applied to the DVD specification having a memory capacity of 4.7 Gbytes.
FIG. 7 is a view showing an eye pattern in the case where the pre-pits having a correction size are applied to the DVD specification having a memory capacity of 4.7 Gbytes.
FIG. 8 is a view showing an effect (a decrease in jitters) in the case where the pre-pits having the correction size are applied to a disc having a higher density than the DVD specification having a memory capacity of 4.7 Gbytes.
FIG. 9 is a view showing an eye pattern in the case where the pre-pits having a specified size are applied to the disc having a density higher than the DVD having a memory capacity of 4.7 Gbytes.
FIG. 10 is a view showing an eye pattern in the case where the pre-pits having a correction size are applied to the disc having a higher density than the DVD having a memory capacity of 4.7 Gbytes.
FIG. 11 is a flowchart showing a playback processing for playing back the optical disc on which pre-pits having a correction size are recorded.

Hereinafter embodiments of the present invention will be explained by referring to the drawings.

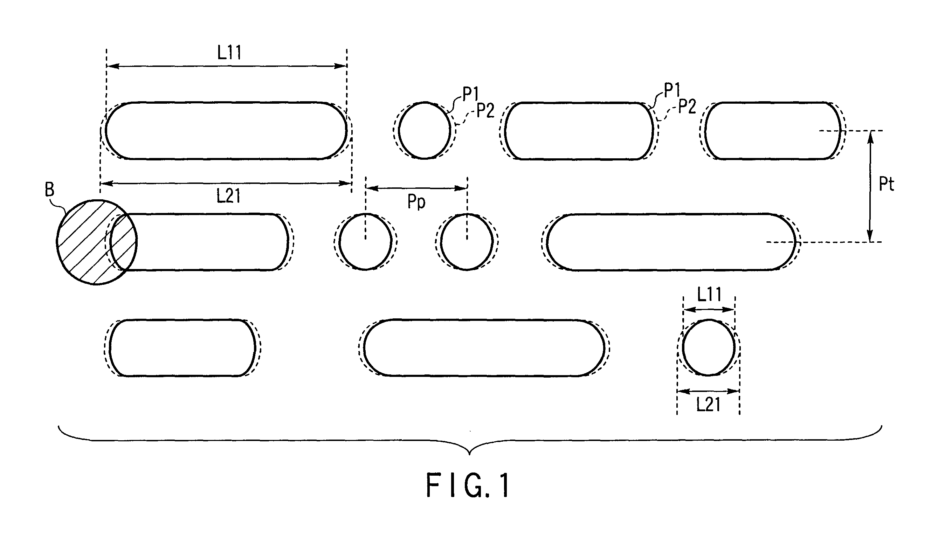

FIG. 1 is a view in which pre-pit rows in the optical disc of the present invention are denoted with a solid line, and pre-pit rows in the conventional optical disc are denoted with a broken line for explaining a difference between the pre-pit rows in the optical disc of the present invention and the pre-pit rows in the conventional optical disc.

On the optical disc of the present invention, the pit row of pits P1 (pre-pits having a correction size) is provided as shown with the solid line of FIG. 1. The pits P1 are defined with the track pitch Pt, the pit pitch Pp and the pit length L11 (different in length in accordance with the data).

On the other hand, the conventional optical disc is provided with a pit row of pits P2 (pre-pits having a specified size) shown with the broken line. The pits P2 are defined with the track pitch Pt and the pit pitch Pp in the same manner as the pits P1. Only the pit length is defined with the pit length L21 (a theoretical length which differs in accordance with data) which differs from the pits P1. Incidentally, the slant line B which is surrounded with a round denotes a beam spot.

FIG. 1 is a top view showing the optical disc. Consequently, a depth of pit and a depth inclination thereof are not shown, but the relationship between the pre-pits of the optical disc according to the present invention and the pre-pits of the conventional optical disc will be as follows. As described above, a plurality of kinds of pre-pits with a specified size are available which have a different length in accordance with the data. These pre-pits all have a constant width, a constant depth and a constant depth inclination. The pre-pits with a correction size are uniformly shorter in length than the pre-pits with the specified size. That is, a plurality of kinds of pre-pits with the correction size are also available which have a different length in accordance with the data. The pre-pits are uniformly shorter in length than the pre-pits with the specified size.

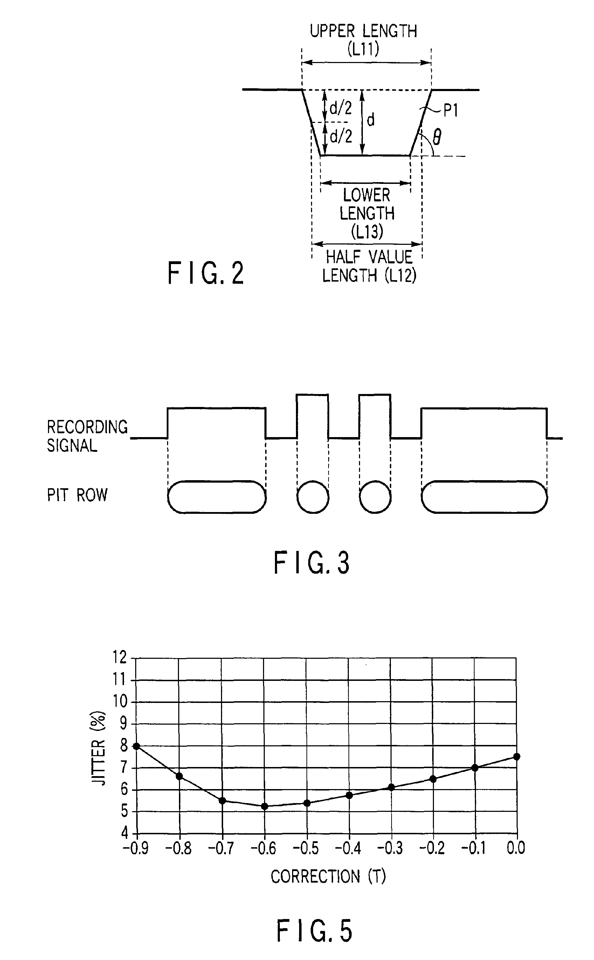

FIG. 2 is a view showing a cross section of pits (pre-pits with the correction size) provided on the optical disc of the present invention.

A depth of both pre-pits having the specified size and the correction size is defined as d. Furthermore, a depth inclination is defined as θ. A length at the position of the depth of d=0 in the pre-pits with the correction size is defined as L11 (which corresponds to the pit length described above), a length at the position of the depth of d/2 is defined as L12, and a length at the position of the depth of d is defined as L13. A length at the position of the depth of d=0 in the pre-pits with the specified size is defined as L21 (which corresponds to the pit length). A length at the position of d/2 is defined as L22, and a length at the position of the depth of d is defined as L23. In this case, the relationship of L12 + α = L22 is established. A specified value of α (α: a correction value, α > 0) will be explained later. Furthermore, a relationship of L11 = (L22 - α) + (d/(tanθ)) (θ ≦ 90° ) is established. Furthermore, the relationship of L13 = (L22 - α) - (d/(tanθ), (θ ≦ 90° ) is established. Incidentally, L11 and L21 are defined as an upper length, and L12 and L22 are defined as a half value length. L13 and L23 are referred to as a lower length. Hereinafter, the present invention will be explained by using the half value length as a reference.

FIG. 3 is a view showing a relationship between the pre-pits formed on the optical disc of the present invention and a recording signal waveform thereof.

A waveform shown in an upper portion of FIG. 3 is a signal waveform for forming pits. In the lower portion of FIG. 3 there is shown pits formed with the signal waveform. Conventionally, the minimum pit can be recorded unless corrected at the time of exposure. However, with an increase in the density of the optical disc, the minimum pit cannot be recorded unless power is increased more than the other pits. Then, as shown in FIG. 3, the present invention is constituted so as to increase the power only at the time of recording the minimum pit.

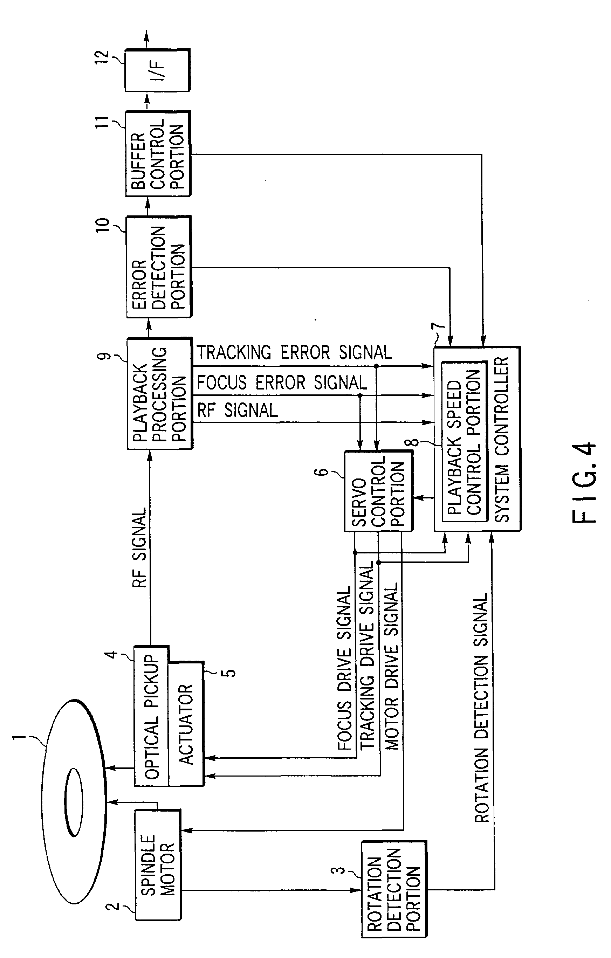

Next, referring to FIG. 4, there will be explained an outline of the playback apparatus for playing back the optical disc of the present invention which has been explained above.

As shown in FIG. 4, the optical disc playback apparatus is provided with a spindle motor 2, a rotation detector 3, an optical pickup 4, an actuator 5, a servo control portion 6, a system controller 7, a playback speed control portion 8, a playback processing portion 9, an error detection portion 10, a buffer control portion 11, and an interface (I/F) 12 and the like.

The spindle motor 2 rotates and drives the optical disc on the basis of the motor drive signal sent from the servo control portion 6. The rotation detector 3 detects the rotation drive of the spindle motor 2 to send the rotation drive of the spindle motor 2 to the system controller 7 as the rotation detection signal.

The optical pickup 4 applies light beams for playback to the optical disc while detecting reflection light from the optical disc to send the reflection light as an RF (Radio Frequency) signal to the playback processing portion 9. An actuator 5 focus drives and tracking drives the optical pickup 4 on the basis of the focus drive signal and the tracking drive signal sent from the serve control portion 6.

The playback processing portion 9 plays back the data of the light disc reflected on the RF signal sent from the optical pickup 4, so that the data is sent to the error detection portion 10. Furthermore, the playback processing portion 9 generates the focus error signal and the tracking error signal from the RF signal sent from the optical pickup 4, so that the focus error signal and the tracking signal are sent to the servo control portion 6. Furthermore, the playback processing portion sends the RF signal, the focus error signal, and the tracking signal to the system controller.

The error detection portion 10 detects an error included in the data of the optical disc sent from the playback processing portion 9 while correcting the error thus detected as much as possible. An error correction code is added to the data recorded on the optical disc so that the error is corrected with the error correction code. However, the error correction capability of the error correction code is limited. In the case where the data of the optical disc includes an error which exceeds the limit of the error correction capability of the error correction code, the error cannot be corrected. The error detection portion 10 notifies a reading error to the system controller 7 in the case where the error in the optical disc cannot be corrected.

The buffer control portion 10 buffers the data on the optical disc which is error corrected with the error detection portion 10, and the data of the optical disc which is buffered is output to the outside via the interface 12.

The system controller 7 controls the whole optical disc apparatus. Furthermore, the playback speed control portion 8 sends to the servo control portion 6 the RF signal, the focus error signal, the tracking error signal, the focus drive signal, and the tracking signal as well as the playback speed control signal for controlling the playback speed of the optical disc (the rotation number of the disc) on the basis of the notification of the reading error from the error detection portion 10. The playback speed of the optical disc is controlled with the control of the playback speed of this playback speed control portion 8.

The servo control portion 6 generates a motor drive signal on the basis of the playback speed control signal to control the drive of the spindle motor with this motor drive signal. Furthermore, the servo control portion 6 generates the focus drive signal and the tracking drive signal on the basis of the focus error signal and the tracking error signal to control the drive of the actuator with this focus drive signal and the tracking drive signal. As a consequence, a favorable focus state and a favorable tracking state can be obtained at all times.

With the optical disc apparatus explained above, an optical disc on which data is recorded with pre-pits with a correction size which is explained above is played back. The state of playback at this time (jitters and the like) will be explained.

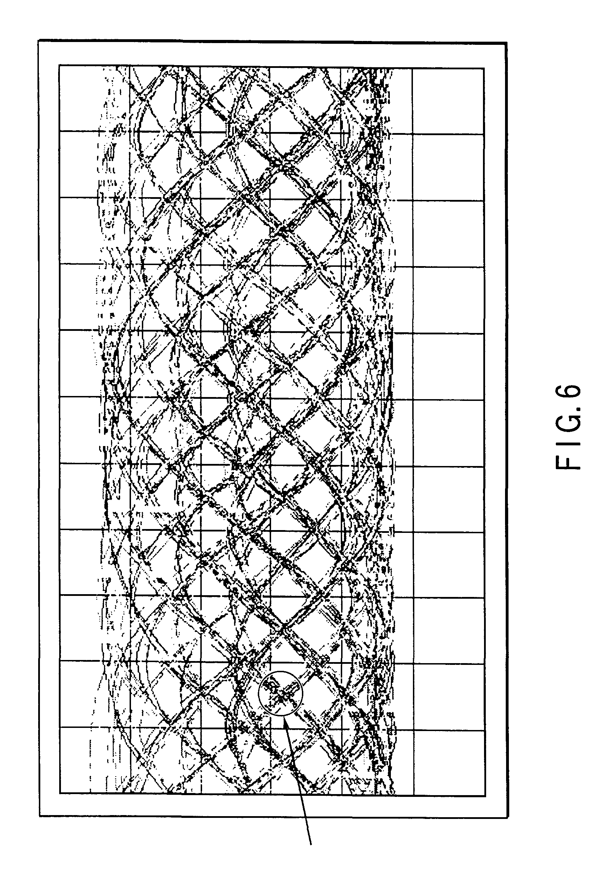

FIGS. 5 through 10 are views for explaining the effect of the present invention.

In the beginning, in the DVD, the effect of the present invention will be confirmed with the playback simulation. In the simulation, an ideal state free from aberration and noises is supposed. Besides, parameters (jitter level is minimum) thereof will be shown below.

| Parameter of the optical system | |
|---|---|
| Optical length | 650 nm |
| Object lens NA | 0.6 |

| Disc parameter | |
|---|---|
| 8-16 modulation | |
| Pit length (upper length) | 0.42 *µ*m |
| Pit length (lower length) | 0.22 *µ*m |
| Pit depth | 150 nm |
| Track pitch | 0.740 *µ*m |
| Minimum pit length | 0.40 *µ*m |

The result of the simulation will be shown below. The "no uniform correction 0.0T, 7.51%" shows a case of the pit with a specified size, and the case shows that the jitter is 7.51%. Furthermore, "uniform correction, -0.1T, 7.02%" shows that the jitter is 7.02% in the case of the pit with a correction size which is uniformly shorter only in length than the pit with the specified size by 0.1T (this 0.1T corresponds to the correction value α described above).

| | | |
|---|---|---|
| No uniform correction | 0.0T | 7.51% |
| Uniform correction | -0.1T | 7.02% |
| Uniform correction | -0.2T | 6.55% |
| Uniform correction | -0.3T | 6.10% |
| Uniform correction | -0.4T | 5.70% |
| Uniform correction | -0.5T | 5.37% |
| Uniform correction | -0.6T | 5.17% |
| Uniform correction | -0.7T | 5.48% |
| Uniform correction | -0.8T | 6.60% |
| Uniform correction | -0.9T | 8.09% |

(one channel bit = 1T ≒ 0.133 *µ*m)

FIG. 5 is a graph showing the above result. The result is obtained in the case where the effect of the present invention is simulated with the optical disc with a DVD specification (for example, with a memory capacity of 4.7 Gbytes). In the correction at this time, the simulation is conducted by using the half value as the reference. For example, the pit configuration of the uniform correction of -0.6T in which a good result is obtained as a jitter value is such that 0.1 *µ*m obtained by halving the difference between the upper length and the lower length becomes a pit inclination portion. The half value of the minimum pit in the simulation is 0.40 *µ*m. In the case of 8 to 16 modulation, this becomes 3T. Then, in the case where the jitter value is favorable (in the case of uniform correction -0.6T), there is provided a case in which the half value is 2.4T (=3T - 0.6T), so that a length of 0.32 *µ*m is provided. The upper length at this time becomes 0.42 (=0.32 + 0.1) *µ*m and the lower length becomes 0.22 (=0.3 - 0.1) *µ*m.

Incidentally, referring to FIG. 5, it is made clear that the jitter can be decreased as compared with the case without correction (0.0T) when the correction value can be set to -0.1T to -0.8T (the above correction value α = 0.1T to 0.8T). For example, pits with a correction size may be formed by adopting the correction value of -0.2T through -0.8T at which the jitter can be decreased by about 10 % as compared with the case without correction. Furthermore, pits with a correction size may be formed by adopting the correction value of -0.6T at which the jitter can be decreased most.

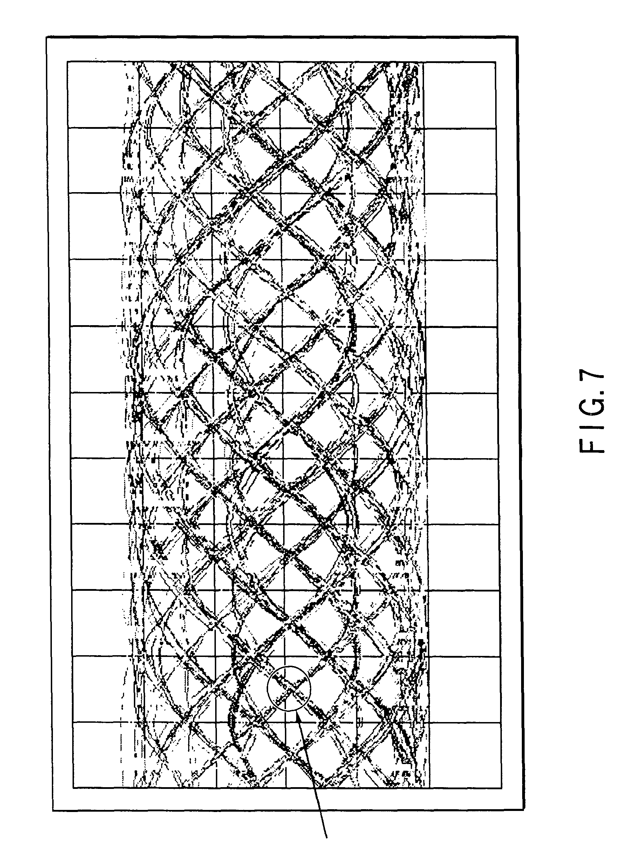

FIG. 6 shows an eye pattern without correction in which the effect of the present invention is simulated in the DVD specification. FIG. 7 shows an eye pattern with correction in which the effect of the present invention is simulated in the DVD specification. As can be seen from FIGS. 6 and 7, the effect of the present invention can be confirmed. It can be confirmed that the portion where the waveform is crossed (portion which is surround with a round) is such that the case of FIG. 7 becomes thinner than the case of FIG. 6. (That is, the jitter is decreased in the case of FIG. 7 as compared with the case of FIG. 6).

Next, the effect of the present invention is confirmed in the playback simulation in the case where the optical disc is set to a density higher than the DVD. In the simulation, an ideal state free from aberration and noises is assumed, and parameters (jitter level is minimum) thereof will be shown below. In this simulation, the wavelength of the light source of the playback apparatus is set to 400 nm. In the previous simulation, the wavelength of the light source of the playback apparatus is set to 650 nm. In a simple calculation in terms of the wavelength, the track pitch becomes 0.45 *µ*m, and the minimum pit length becomes 0.246 *µ*m. In the simulation, a further calculation is conducted in the case where the recording density is further raised.

| Parameter of the optical system | |
|---|---|
| Light source wavelength | 400 nm |
| Object lens NA | 0.6 |

| Disc parameter | |
|---|---|
| 8-16 modulation | |
| Pit length (upper length) | 0.252 *µ*m |
| Pit length (lower length) | 0.132 *µ*m |
| Pit depth | 90 nm |
| Track pitch | 0.40 *µ*m |
| Minimum pit length | 0.24 *µ*m |

The result of the simulation is shown below. The following "no uniform correction, 0.0T, 10.82 % shows that the jitter is 10.82% in the case of the pits with a specified size. Besides, the "uniform correction, -0.1T, 9.77%" shows that the jitter is 9.77% in the case of pits with correction sizes which are uniformly shorter only in length than the length of the pits with a specified size by the length of 0.1T (this 0.1T corresponds to the correction value α)

| | | |
|---|---|---|
| No uniform correction | 0.0T | 10.82% |
| Uniform correction | -0.1T | 9.77% |
| Uniform correction | -0.2T | 9.34% |
| Uniform correction | -0.3T | 8.93% |
| Uniform correction | -0.4T | 8.60% |
| Uniform correction | -0.5T | 8.31% |
| Uniform correction | -0.6T | 8.16% |
| Uniform correction | -0.7T | 8.55% |
| Uniform correction | -0.8T | 9.51% |
| Uniform correction | -0.9T | 10.83% |

(one channel bit = 1T ≒ 0.08 *µ* m)

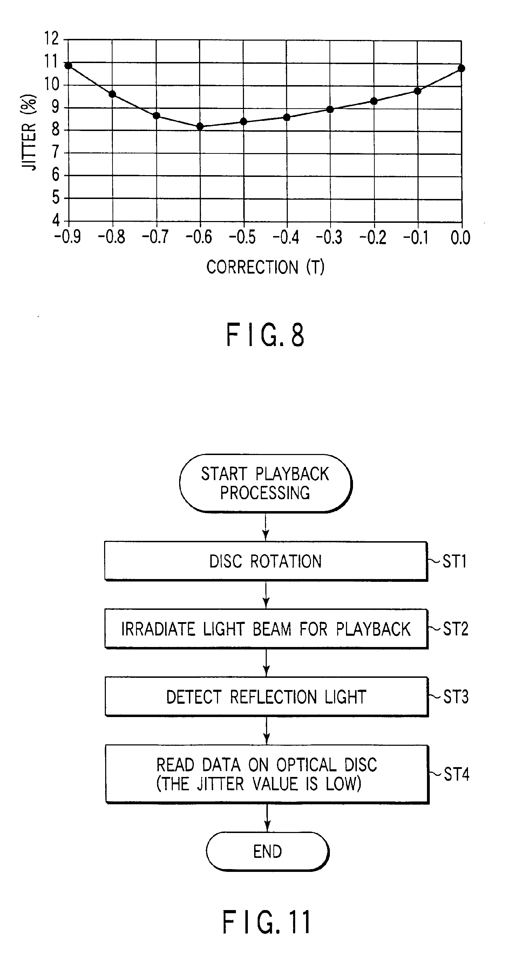

FIG. 8 is a graph showing this result. This is the result obtained when the effect of the present invention is simulated with an optical disc with a density higher than the optical disc with the DVD specification (for example, with the memory capacity of 4.7 Gbytes). In the correction at this time, the simulation is conducted by referencing the half value. For example, the pit configuration of the uniform correction of -0.6T at which a favorable result is obtained as a jitter value is such that 0.06 *µ*m obtained by halving a difference between the upper length and the lower length is given as a pit inclination portion. The half value of the minimum pit in the simulation is 0.24 *µ*m, which becomes 3T in the case of 8-16 modulation. Then, in the case where the jitter value is favorable (in the case of the uniform correction of -0.6T), the half value becomes 2.4T (=3T - 0.6T) and the length of 0.192 *µ*m is provided. The upper length at this time becomes 0.252 (= 0.192 + 0.06) *µ*m while the lower length becomes 0.132 (0.192 - 0.06) *µ*m.

Incidentally, referring to FIG. 8, it is made clear that the jitter can be decreased when the correction value is set to -0.1T to -0.8T (the above correction value α = 0.1T to 0.8T) as compared with the case without correction (0.0T). For example, pits with the correction size may be formed by adopting a correction value of -0.1T to 0.8T at which the jitter can be decreased by about 10% as compared with the case without correction. Furthermore, pits with the correction size may be formed by adopting the correction value of -0.6T at which the jitter can be decreased most.

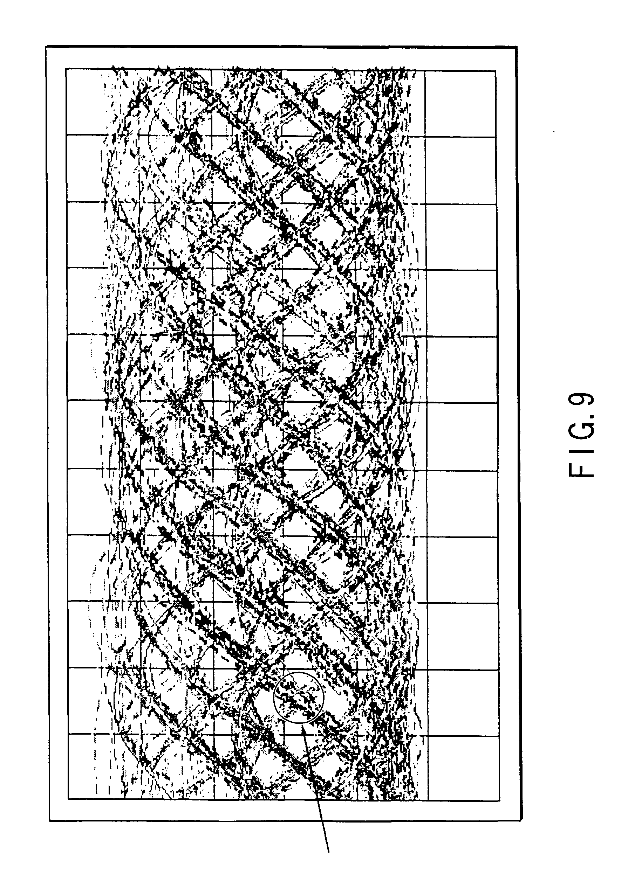

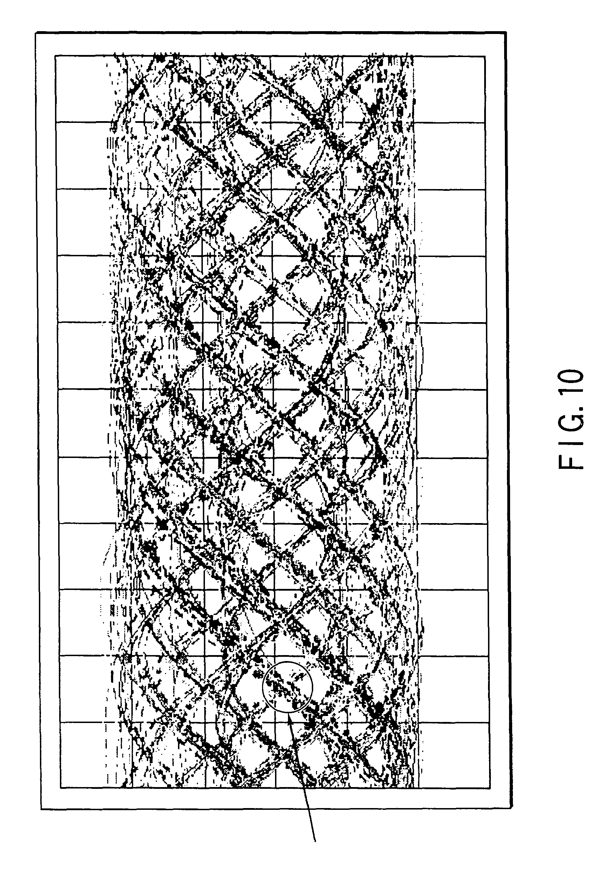

FIG. 9 is a view showing an eye pattern without correction in which the effect of the present invention is simulated in the higher density specification than the DVD. FIG. 10 is a view showing an eye pattern with correction in which the effect of the present invention is simulated in a higher specification than the DVD. As can be seen from FIGS. 8 and 9, the effect of the present invention can be confirmed. It can be confirmed that the case of FIG. 10 becomes thinner than the case of FIG. 9 at a portion where the waveform is crossed (a portion which is surrounded with a round) (that is, the jitter is decreased in the case of FIG. 10 as compared with in the case of FIG. 9).

In the actual drive apparatus, the jitter can be suppressed to a low level even when a disc is manufactured in which the density is heightened in this manner, so that the density level does not cause a problem.

Next, referring to a flowchart shown in FIG. 11, there will be explained a method for playing back an optical disc with the optical disc playback apparatus shown in FIG. 4. The optical disc to be played back is an optical disc provided with pre-pits with a correction size which have been explained above.

In the beginning, the optical disc is rotated at a predetermined speed with a spindle motor 2 (ST1). Subsequently, light beam for playback is irradiated to the optical disc with the optical pickup 4 (ST2), so that reflection light from the optical disc can be detected (ST3). With the playback processing portion 9, the optical disc data reflected on the detected reflection light is read (ST4). The jitter value obtained at the time of reading data from the pre-pits with the correction size can be suppressed to a lower level than the jitter value at the time of reading data from the pre-pits with the specified size. Consequently, highly reliable playback can be realized.

As explained above, according to the present invention, since the jitter value at the time of playing back can be set to be minimum even in a higher density, there can be provided an optical disc capable of stably reading information. Furthermore, there can be provided a playback apparatus and a method for playing back such a disc.

Incidentally, the present invention is not limited to the embodiments described above. In the above embodiments, there has been explained a case in which the pre-pits with the correction size which have only shorter length than the pre-pits with the specified size (the length of the pre-pits with the specified size > the length of the pre-pits with the correction size) is applied. However, it is considered that applying the pre-pits with the correction size which have only longer length than the pre-pits with the specified size depending upon the depth inclination of the pits (the length of the pre-pits with the specified size < the length of the pre-pits with the correction size) provide a more favorable result. In this case, a correction value is -α.

According to the present invention, the following optical disc, an optical disc playback apparatus and a method for playing back an optical disc can be obtained.
(1) An optical disc which enables recording data with a plurality of kinds of pre-pits with a correction size which have a constant width and have a length only uniformly shorter than a plurality of kinds of pre-pits with a specified size which have different lengths thereby stably playing back information in order to suppress the jitter value and improve the cross talk.
(2) An optical disc playback apparatus and a method for playing back an optical disc capable of recording data with a plurality of pre-pits with a correction size which have a constant width and a length only uniformly shorter than a plurality of kinds of pre-pits with a specified size which have different lengths thereby stably playing back information in order to suppress the jitter value and improve the cross talk.

## Claims

1. An optical disc **characterized by** having a plurality of kinds of pre-pits (P1) with a correction size which have a length only uniformly shorter than a plurality of kinds of pre-pits (P2) with a specified size which have a constant width, a constant depth and a constant depth inclination and a different length in correspondence to the data so that data is recorded with the pre-pits with the correction size.

2. The optical disc according to claim 1,
**characterized in that** when a depth of both pre-pits with the specified size and the correction size is defined as d and a length of the pre-pits with the specified size at the position of the depth of d/2 is defined as L, a length of the pre-pits with the correction size at the position of the depth of d/2 is set to L-α (α > 0).

3. The optical disc according to claim 1,
**characterized in that** when a depth of both pre-pits with the specified size and the correction size is defined as d, a length of the pre-pits with the specified size at the position of the depth of d/2 is defined as L, and an inclination angle of the depth of the both pre-pits with the specified size and the correction size is defined as θ, a length of the pre-pits with the correction size at the position of the depth of d/2 is set to L-α (α > 0), a length of the pre-pits with the correction size at the position of the depth of d=0 is set to (L-α) + (d/(tanθ)), (θ ≦ 90°) and a length of the pre-pits at the correction size at the position of the depth of d is set to (L-α) - (d/(tanθ)), (θ ≦ 90°).

4. The optical disc according to claim 2,
**characterized in that** when a length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L-α = 3T - α (α = 0.1T through 0.8T).

5. The optical disc according to claim 2,
**characterized in that** when the length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L -α = 2.4T.

6. The optical disc according to claim 2,
**characterized in that** when the length at the position of the depth of d/2 of the pre-pits with the specified size which have the minimum length out of the plurality of kinds of the pre-pits with the specified size is set to L = 3T (1T ≒ 0.08 *µ*m*),* a length at the position of the depth of d/2 of the pre-pits with the correction size which have the minimum length corresponding to the pre-pits with the specified size which have the minimum length is set to L - a = 3T - α (α = 0.1T through 0.8T).

7. The optical disc according to claim 2,
**characterized in that** when the length at the position of the depth of d/2 of the pre-pits with the specified size which have the minimum length out of the plurality of kinds of pre-pits with the specified size is set to L = 3T (1T ≒ 0.08 *µ*m), a length at the position of the depth of d/2 of the pre-pits with the correction size which have the minimum length corresponding to the pre-pits with the specified size which have the minimum length is set to L - α = 2.4T.

8. An optical disc playback apparatus
**characterized by** comprising playback means (9) for playing back an optical disc in which data is recorded with a plurality of kinds of pre-pits (P1) with a correction size which have a length only uniformly shorter than the plurality of kinds of pre-pits (P2) with a specified size which have a constant width, a constant depth and a constant depth inclination and a different length corresponding to data.

9. The optical disc playback apparatus according to claim 8, **characterized in that** when a depth of both pre-pits with the specified size and the correction size is defined as d and a length of the pre-pits with the specified size at the position of the depth of d/2 is defined as L, a length of the pre-pits with the correction size at the position of the depth of d/2 is set to L - α (α > 0), and
the playback means plays back an optical disc in which data is recorded with the pre-pits with the correction size.

10. The optical disc playback apparatus according to claim 8, **characterized in that** when a depth of both pre-pits with the specified size and correction size is defined as d, a length of the pre-pits with the specified size at the position of the depth of d/2 is defined as L, and an inclination angle of the depth of both pre-pits with the specified size and the correction size is defined as θ, a length of the pre-pits with the correction size at the position of the depth of d/2 is set to L - α (α > 0), a length of the pre-pits with the correction size at the position of the depth of d = 0 is set to (L - α) + (d/(tanθ)), (θ ≦ 90°) and a length of the pre-pits of the correction size at the position of the depth d is set to (L - α) - (d/(tanθ)), (θ ≦ 90°), and
the playback means plays back an optical disc in which data is recorded with the pre-pits with the correction size.

11. The optical disc playback apparatus according to claim 9, **characterized in that** when a length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L - α = 3T - α (α = 0.1T through 0.8T), and
the playback means plays back an optical disc in which data is recorded with the pre-pits with the correction size.

12. The optical disc playback apparatus according to claim 9, **characterized in that** when a length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L - α = 2.4T, and
the playback means plays back an optical disc in which data is recorded with the pre-pits with the correction size.

13. The optical disc playback apparatus according to claim 9, **characterized in that** when a length at the position of the depth of d/2 of the pre-pits with the specified size which have the minimum length out of the plurality of kinds of pre-pits with the specified size is set to L = 3T (1T ≒ 0.8 *µ*m), a length at the position of the depth of d/2 of the pre-pits with the correction size which have the minimum length corresponding to the pre-pits with the specified size which have the minimum length is set to L - α = 3T - α (α = 0.1T through 0.8T), and
the playback means plays back the optical disc in which data is recorded with the pre-pits with the correction size.

14. The optical disc playback apparatus according to claim 9, **characterized in that** when a length at the position of the depth of d/2 of the pre-pits with the specified size which have the minimum length out of the plurality of kinds of pre-pits with the specified size is set to L = 3T (1T ≒ 0.8 *µ*m), a length at the position of the depth of d/2 of the pre-pits with the correction size which have the minimum length corresponding to the pre-pits with the specified size which have the minimum length is set to L - α = 2.4T, and
the playback means plays back an optical disc in which data is recorded with the pre-pits with the correction size.

15. A method for playing back an optical disc **characterized in that** an optical disc is played back wherein data is recorded with a plurality of kinds of pre-pits with a correction size which have a length only uniformly shorter than the plurality of kinds of pre-pits with a specified size having a constant width, a constant depth and a constant depth inclination and a different length in correspondence to the data.

16. The method for playing back an optical disc according to claim 15, **characterized in that** when a depth of both pre-pits with the specified size and the correction size is defined as d and length of the pre-pits with the specified size at the position of the depth of d/2 is defined as L, a length of the pre-pits with the correction size at the position of the depth of d/2 is set to L - α (α > 0), and
an optical disc is played back in which data is recorded with the pre-pits with the correction size.

17. The method for playing back an optical disc according to claim 16, **characterized in that** when a length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L - α = 3T - α (α = 0.1T through 0.8T), and
an optical disc is played back in which data is recorded with the pre-pits with the correction size.

18. The method for playing back an optical disc according to claim 16, **characterized in that** when the length at the position of the depth of d/2 of the pre-pits with the specified size which have the minimum length out of the plurality of kinds of pre-pits with the specified size is set to L = 3T (1T ≒ 0.133 *µ*m), a length at the position of the depth of d/2 of the pre-pits with the correction size which have the minimum length corresponding to the pre-pits with the specified size which have the minimum length is set to L - α = 2.4T, and
an optical disc is played back in which data is recorded with the pre-pits with the correction size.

19. The method for playing back an optical disc according to claim 16, **characterized in that** when a length at the position of the depth of d/2 of the pre-pits with the specified size which have the minimum length out of the plurality of kinds of pre-pits with the specified size is set to L = 3T (1T ≒ 0.08 *µ*m), a length at the position of the depth of d/2 of the pre-pits with the correction size which have the minimum length corresponding to the pre-pits with the specified size which have the minimum length is set to L - α = 3T - α (α = 0.1T through 0.8T), and
an optical disc is played back in which data is recorded with the pre-pits with the correction size.

20. The method for playing back an optical disc according to claim 16, **characterized in that** when the length at the position of the depth of d/2 of the pre-pits with the specified size which have the minimum length out of the plurality of kinds of pre-pits with the specified size is set to L = 3T (1T ≒ 0.08 *µ*m), a length at the position of the depth of d/2 of the pre-pits with the correction size which have the minimum length corresponding to the pre-pits with the specified size which have the minimum length is set to L - α = 2.4T, and
an optical disc is played back in which data is recorded with the pre-pits with the correction size.
